# EUROPEAN PATENT APPLICATION

(11) **EP 1 273 828 A2**
(43) Date of publication of application: **08.01.2003**
(21) Application number: 02013895.4
(22) Date of filing: 24.06.2002
(51) Int. Cl.: F16H 47/04

(54) **Torque split power transmission**

(30) Priority: 03.07.2001 GB 0116202
(71) Applicant: Agco GmbH & Co., 87616 Marktoberdorf (DE)
(72) Inventor: Heindle, Richard, 87616 Marktoberdorf (DE)
(74) Representative: Elsworth, Dominic Stephen

(57) **Abstract**

A torque split power transmission is described, having an input shaft (2) and an output shaft (4), said input shaft (2) and said output shaft (4) for torque splitting purposes in a first mechanical drive line having a fixed ratio of transmission and in a second drive line having an infinitely variable ratio of transmission (5) between a drive shaft (10) and a driven shaft (13) being in connection with a planetary gear (3). The shaft being in direct connection with the planetary gear is locked at least approximately once to standstill over the whole range of revolutions. To reduce power losses at special working points the infinitely variable transmission (5) being located in the second drive line is free of any torque transmission but keeps a supporting function when reaching a ratio of transmission at which the shaft being connected with the planetary gear at least approximately stands still.

## Description

The invention concerns a torque split, hydro-mechanical transmission.

Torque split hydro-mechanical transmissions of this kind are known (prospectus FENDT FAVORIT 900, page 20, edition E4/98-5). For example, these transmissions are used on vehicles having a wide range of driving speeds. The transmissions comprise input and output shafts and between the said shafts a hydrostatic gear positioned in a second drive line, while a first drive line acts mechanically. The hydrostatic gear is designed as a hydrostatic unit comprising a pump and a hydro-motor having a variable stroke. Pump and motor are arranged within a common hydraulic circuit. Both the pump and the first drive line are driven commonly via the input shaft and a toothed gear. The driven shaft of the motor is connected to the output shaft via a further toothed gear. One of the toothed gears generally is designed as a planetary gear, which may act to split the torque when positioned at the input side of the transmission and may act to sum the torque when positioned at the output side of the transmission. The variable stroke of the pump and of the motor if necessary are controlled in a manner so that at the moment of starting acceleration of the vehicle equipped with such a transmission, the whole power is transmitted hydrostatically via the second drive line. At the moment of starting the motion of the vehicle the first drive line does not transmit mechanical power, the output shaft being stationary (the output shaft is connected via various shafts to the vehicle's drive axles, which are stationary and hence the output shaft must be stationary). As the speed of the vehicle increases, the hydraulic power transmitted via the second drive line decreases and the power transmitted via the first drive line increases. Finally, at a certain number of revolutions of the output shaft of the transmission, the whole power is transmitted mechanically to the output shaft via the first drive line only. At this point the second drive line does not transmit any power, because either the drive shaft or the driven shaft of the hydrostatic gear is blocked hydrostatically, depending whether the planetary gear acts to split the torque or sum the torque. This is advantageous because the whole power is transmitted with high efficiency in mechanical manner, while the hydrostatic drive line having a lower efficiency is not working.

Nevertheless, in this condition the hydrostatic gear does not work loss free. Whilst, the hydrostatic gear does not contribute to drive the vehicle it fulfils a supporting function. The hydrostatic gear is still under high hydrostatic pressure loading the bearings in axial direction and having power losses caused by unavoidable leakage losses.

It is the object of the invention to reduce power losses in said transmission.

The infinitely variable transmission located in the second drive line is free of any torque transmission when reaching a drive ratio at which the shaft connected with the planetary gear at least approximately stands still.

The infinitely variable gear is controlled to have no function at the point where its efficiency is very low. This is the fact independently whether the infinitely variable gear is driven mechanically, electrically or hydraulically. At those points the torque split power transmission is reduced to the mechanical drive line having the high efficiency.

According to claims 2 and 3 the independently rotating shaft is made free of load in a technically simple manner by the fact, that the shaft is blocked by a blocked apparatus when reaching a ratio of transmission at which the shaft at least approximately stands still. Preferably, the blocking apparatus is designed mechanically. According to claim 4, the mechanical blocking of the shaft is made by frictionally coupling the shaft to a stationary member such as the transmission housing, or by positively engaging a suitable member such as a pin with an abutment on or attached to the shaft.

According to claim 5 a power transmission especially suitable for heavy vehicles is characterised in that the second drive line has a hydrostatic gear having two hydrostatic elements (pump, motor) positioned with a common circuit, said hydrostatic gear being relievable of the load by opening of a valve being positioned within the hydraulic circuit. Thus, the infinitely variable gear in the second drive line can work loss free even under those circumstances, in which during blocked action an unwanted working pressure is generated caused by slight shiftings of control elements of the hydrostat being connected with the independently rotating shaft.

In connection with claim 5 the hydrostatic element (pump, motor) connected with the shaft opposite the planetary gear can be blocked by the closing of a valve. The valve is positioned within the flow medium of the hydraulic elements coupled to the shaft.

Several embodiments of the invention are illustrated in the drawing and will be explained in detail below.
- Figure 1: shows a schematic representative of a torque split power transmission having a planetary gear at the input side.
- Figure 2: shows a schematic representation of a torque split power transmission having a planetary gear at the output side.
- Figure 3: shows a schematic representation of a torque split power transmission having a hydrostatic unit as a variable gear.

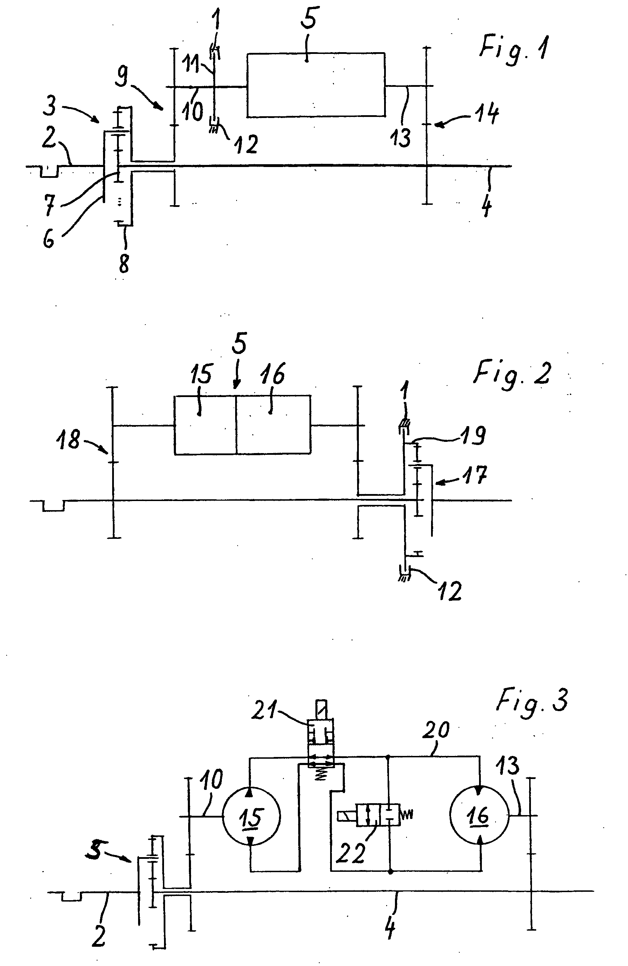

The torque split power transmission of Figure 1 includes a housing 1, an input shaft 2, a torque splitting planetary gear 3, an output shaft 4, and an infinitely variable gear 5. The infinitely variable gear 5 may be a mechanically, an electrically or an hydraulically acting gear.

The input shaft 2 is coupled to a planet carrier 6 of the planetary gear 3. The sun wheel 7 of the planetary gear 3 is the beginning of a first drive line and contains the output shaft 4 being coupled with torsional strength to the sun wheel 7. The first drive line transmits exclusively mechanical power in a fixed ratio of transmission.

The ring gear 8 (an internally toothed wheel) of the planetary gear3 is the beginning of a second drive line containing the infinitely variable gear 5. A gear pair connects the ring gear 8 with a drive shaft 10 of the infinitely variable gear 5. The drive shaft 10 includes a braking disk 11 coupled to the drive shaft 10 for rotation therewith. A locking device 12 is allocated to the drive shaft 10 serving for frictional coupling or positive coupling of the drive shaft 10 to the housing 1 of the transmission. A driven shaft 13 is provided at the downstream end of the infinitely variable gear 5 and is connected with the output shaft 4 by a gear pair 14.

The torque split power transmission of Figure 2 differs from the embodiment of Figure 1 insofar as the planetary gear 17 is positioned at the output of the transmission instead of at the input. The torque split takes place at the gear pair 18. The planetary gear 17 is adding up the torques. The ring gear 19 is designed as a braking disk being allocated to the locking device 12. There is a further difference insofar as the infinitely variable gear 5 is designed as a hydrostatic gear. The hydrostatic gear includes two hydrostatic elements, a pump 15 and a motor 16, being combined to form a common hydrostat, as further illustrated in detail in Figure 3. The hydrostat is controlled by a control device (not shown).

The torque split power transmission of figure 3 contains a planetary gear 3 positioned at the input side, as shown in Figure 1. It further includes a hydrostatic gear having a pump 15 and a motor 16 as shown in Figure 2. The pump 15 and the motor 16 are connected by a closed hydraulic circuit 20. A blocking valve 21 is arranged in the hydraulic circuit blocking the whole hydrostatic gear when in a closed position. The hydraulic circuit to the motor 16 is bridged with a valve 22 to prevent an increase of pressure generated by irregularities at random of the control device, the increase of pressure being accompanied with a resulting decrease of power.

The principal working of the torque split power transmission is described above. Independently of whether the infinitely variable gear in the second drive line is mechanically, electrically or hydraulically driven, the infinitely variable gear 5 always occurs in the same manner, ie during a normal number of working revolutions of the input shaft 2. The shaft (drive shaft 10 or driven shaft 13) being directly connected with the planetary gear 3 or 17 comes to a standstill when the output shaft 4 reaches at least a predetermined number of revolutions, for example the maximum number of revolutions. At this working point the infinitely variable gear 5 does not transmit any power, but has a supporting function for the ordinary working of the planetary gear 3, 17 (torque splitting or torque summing). To fulfil this function the shaft 10 or 13 respectively is blocked by the blocking device 12. The blocking device 12 generates the supporting moment and the infinitely variable gear 5 is completely unloaded by (free of) any torque transmission.

The blocking of the infinitely variable gear 5 is made by frictional coupling or positive couple of the drive shaft 10 or the driven shaft 13 respectively by a mechanically working blocking device 12 as shown in respect to the torque split power transmissions of Figures 1 and 2. However, the infinitely variable gear of Figure 3 is fixed in a hydraulic manner by closing the valve 21 and thus stopping the flow of hydraulic fluid in the hydraulic circuit 20. At the same time, the valve 22 opens making a shortcut of motor 16, enabling a circulation of the oil from the motor, the oil being unpressurised.

## Claims

1. A torque split power transmission, having an input shaft (2) and an output shaft (4), said input shaft (2) and said output shaft (4) for torque splitting purposes in a first mechanical drive line having a fixed ratio of transmission and in a second drive line having an infinitely variable ratio of transmission (5) between a drive shaft (10) and a driven shaft (13) being in connection with a planetary gear, wherein the drive or driven shaft in direct connection with the planetary gear is locked at least approximately once to standstill over the whole range of revolutions of said drive of driven shafts, wherein the infinitely variable transmission located in the second drive line is free of any torque transmission when reaching a ratio of transmission at which the shaft connected with the planetary gear at least approximately stands still.

2. The torque split power transmission of Claim 1, wherein upon reaching a ratio of transmission at which the shaft at least approximately stands still rotation of said drive or driven shaft is prevented by a braking apparatus.

3. The torque split power transmission of Claim 2, wherein said braking apparatus comprises a mechanical brake.

4. The torque split power transmission of Claim 3, wherein the mechanical brake includes a frictional coupling or form coupling.

5. The torque split power transmission of Claims 1 and 2, wherein the second drive line includes a hydrostatic gear having two hydrostatic elements (pump, motor) positioned within a common circuit, the hydrostatic gear being relievable of the load by opening of a valve positioned within the hydraulic circuit.

6. The torque split power transmission of Claim 5,wherein the hydrostatic element connected with the drive or driven shaft opposite the planetary gear is blocked by the closing of a valve, said valve being positioned within the streaming medium of the hydraulic elements coupled to the shaft.

7. The torque split power transmission of Claims 1 to 6, wherein the shaft in direct connection with the planetary gear at least approximately stands still when the rotation of the output shaft reaches a maximum.
